# EUROPÄISCHE PATENTANMELDUNG

(11) **EP 3 929 472 A1**
(43) Veröffentlichungstag der Anmeldung: **29.12.2021**
(21) Anmeldenummer: 20182509.8
(22) Anmeldetag: 26.06.2020
(51) Int. Cl.: F16J 15/3204, B33Y 30/00, F16J 15/3208, F16J 15/3212, F16J 15/3232, F16J 15/3284

(54) **DICHTUNGSEINRICHTUNG FÜR EINE ANLAGE DER ADDITIVEN FERTIGUNG**

(71) Anmelder: Peter Lehmann AG, 3552 Bärau (CH)
(72) Erfinder: HULLIGER, Urs, 4543 Deitingen (CH); LEHMANN, Hansruedi, 3532 Mirchel (CH)
(74) Vertreter: AMMANN PATENTANWÄLTE AG

(57) **Zusammenfassung**

Für den Betrieb von Anlagen der additiven Fertigung (1) bei Temperaturen von mehreren hundert Grad Celsius, insbesondere 400 °C und mehr, wird eine Dichtung aus metallischem Werkstoff oder einem temperaturfesten Kunststoff wie PTFE oder Silikon vorgeschlagen.

## Beschreibung

Die vorliegende Erfindung betrifft eine Dichtungseinrichtung gemäss Oberbegriff des Anspruch 1.

Bei einer Art von additivem Fertigungsverfahren wird das Werkstück auf einer Bauplattform aufgebaut, in dem über der Bauplattform aufgeschichtetes, pulverförmiges (granulares) Baumaterial selektiv erhitzt wird, wodurch die Körner des Baumaterials miteinander verbunden werden, insbesondere durch Schmelzen oder Sintern. Durch abwechselndes Aufbringen von Schichten des Baumaterials und selektives Erhitzen wird Schicht für Schicht das Werkstück gebildet. Das Aufbringen von Schichten wird bei bekannten Systemen durch Absenken der Bauplattform in einem Bauschacht in Form einer Wanne, Aufbringen von Baumaterial und Glattstreichen der Baumaterialoberfläche mit einem Rakel, in der Regel bündig mit der Oberkante des Bauschachts, realisiert. Das selektive Erhitzen geschieht in der Regel durch gerichtetes, fokussiertes Aufbringen von Strahlung, wie Laser mit geeigneter Wellenlänge, Elektronenstrahl, LED-Licht. Die erhitzten Bereiche des Baumaterials entsprechen Querschnitten durch das Werkstück. Die Partikel werden dadurch je nachdem zusammengesintert (SLS: *Selective Laser Sintering*) oder geschmolzen (SLM: *Selective Laser Melting)* und wieder verfestigt.

Eine Vorrichtung für das SLM-Verfahren ist in der EP-A-1 234 625 beschrieben.

Bei den bekannten Systemen erstreckt sich die Bauplattform (gegebenenfalls inklusive eines Trägers) über den gesamten Querschnitt des Bauschachts. Der Bauschacht weist über die Hubhöhe, über die sich die Bauplattform während der Fertigung bewegt, einen konstanten Querschnitt auf. Gegenüber der Wand des Bauschachts ist die Bauplattform abgedichtet, um das Eindringen von Baumaterial von oberhalb der Bauplattform in den Raum unterhalb der Bauplattform zu verhindern. Diese Dichtung muss hohen Anforderungen genügen, da das Verschwinden von Baumaterial aus der Fertigungszone die Qualität der Oberfläche des Baumaterials beeinträchtigen kann, insbesondere solange sich die Fertigungszone nahe der Oberfläche der Bauplattform befindet. In späteren Phasen der Fertigung eines Werkstückes kann das Verschwinden von Baumaterial zur Ausbildung von Hohlräumen führen, die einerseits durch plötzliches Kollabieren wiederum den Fertigungsprozess stören können und andererseits unvorhergesehene Belastungen auf filigrane Strukturen nach sich ziehen können durch darauf lastendes Baumaterial, wodurch sich Verformungen oder sogar Schäden am Werkstück ergeben können. Optimal ist auch eine gegenüber Luft, d. h. wenigstens Sauerstoff, wirkende Dichtung: Sauerstoff kann wegen seiner Reaktivität das Baumaterial chemisch nachteilig verändern (oxidieren) und eine über der Bauzone liegende Schicht von Schutzgas verdünnen.

Erschwerend tritt hinzu, dass bei der Fertigung Temperaturen von mehreren hundert Grad Celsius auftreten.

Die technische Entwicklung geht unter anderem zu Verfahren hin, die höhere Temperaturen erfordern. Während bisher Temperaturen bis zu 200 oder 300 °C auftraten, die noch mit Dichtungen auf Kunststoffbasis bewältigt werden können, geht die Forderung neuerdings dahin, dass Temperaturen bis 500 °C oder sogar 800 °C möglich sein sollen.

Ein anderer Aspekt von Anlagen der additiven Fertigung ist die Form des Bauschachts. Für bekannte Dichtungssysteme war es erforderlich, dass die Ecken des Bauschachts abgerundet ausgeführt sind. Damit ist es nicht mehr möglich, den Bauschacht einfacherweise aus Platten zu bilden, wobei sich scharfe Ecken ergeben würden. Das Herstellen von Bauschächten mit abgerundeten Ecken ist wesentlich aufwändiger als die Herstellung mit einem rechteckigen Querschnitt.

Eine Aufgabe der vorliegenden Erfindung besteht darin, eine Dichtungseinrichtung anzugeben, die höheren Temperaturen, insbesondere Temperaturen von mindestens 400 Grad Celsius, wiederstehen kann. Eine andere, optional zu lösende Aufgabe besteht darin, eine solche Dichtung anzugeben, die das Erfordernis nach Abrunden von Ecken im Querschnitt des Bauschachts vermeidet.

Eine solche Dichtungseinrichtung ist im Anspruch 1 angegeben. Die weiteren Ansprüche geben bevorzugte Ausführungsformen an, von denen wenigstens eine auch die zweitgenannte optionale Aufgabe löst.

Generell wird daher vorgeschlagen, die Dichtung im Wesentlichen aus einem metallischen Werkstoff oder einem dauerelastischen Polymer, insbesondere auf der Basis von PTFE oder Silikon, zu bilden, wobei zur Abdichtung gegenüber der Bauschachtwand mindestens eine lippenförmige Erhebung dient.

Weiter bevorzugt setzt sich die Dichtung aus geraden Abschnitten zusammen, die über Ecken verbunden sind, weist also eine rechteckige oder allgemeiner polygonale Form auf. Sie ist damit u.a. in einem relativ einfach herstellbaren, rechteckigen Bauschacht einsetzbar.

Die Erfindung wird weiter an einem Ausführungsbeispiel unter Bezugnahme auf Figuren erläutert. Es zeigen:
- Figur 1: Isometrische Ansicht eines Bauschachts.
- Figur 2: Schnitt gemäss II-II in Figur 1.
- Figur 3: Schnitt wie in Figur 2 durch eine Dichtung.
- Figur 4: Vergrösserter Ausschnitt gemäss IV in Figur 3.
- Figur 5: Schnitt durch eine zweite Ausführungsform.
- Figur 6: Detailschnitt durch Dichtlippen.

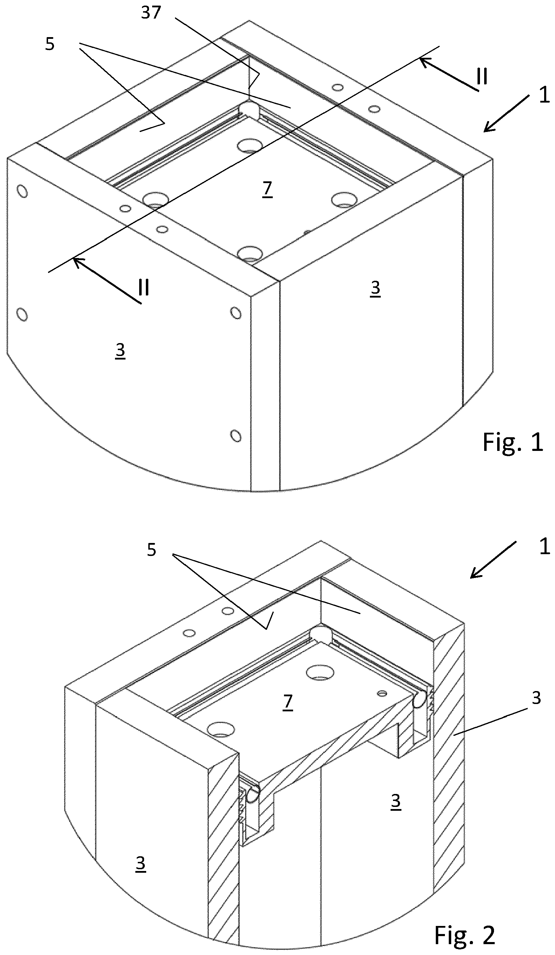

Wie in Figur 1 dargestellt, besteht ein Bauschacht 1 im einfachsten Fall aus einer rechteckigen Anordnung von Platten 3. Die Platten 3 haben auf ihren Innenseiten 5 eine sehr fein bearbeitete Oberfläche, insbesondere eine feingeschliffene Oberfläche, um den Widerstand gegen ein Verschieben einer Bauplattform mit Dichtung 7 im Bauschacht zu erleichtern und auch die Dichtwirkung der Dichtung 7 zu unterstützen. Die restlichen Teile der Bauplattform wie auch die Vorrichtungen zum Bewegen der Bauplattform sind der besseren Darstellung wegen weggelassen.

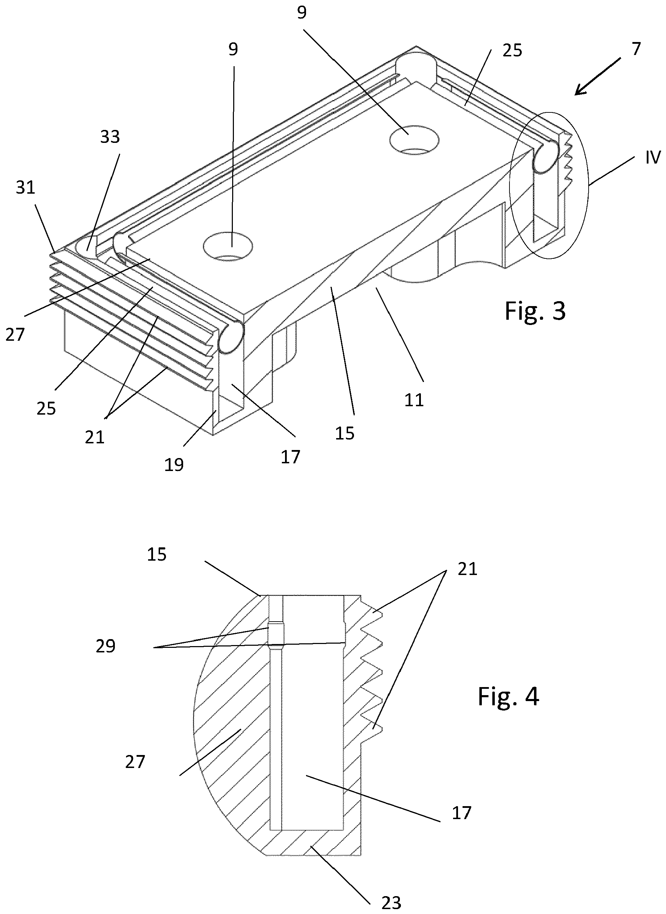

Figur 2 zeigt die Dichtung 7 im Bauschacht 1, Figur 3 vergrössert die Dichtung alleine jeweils in einer geschnittenen, isometrischen Ansicht. Die eigentliche Bauplattform wird auf der Dichtung 7 angeordnet, wofür Befestigungslöcher 9 für Befestigungsmittel wie zum Beispiel Schrauben vorhanden sind. Unten weist die Dichtung 7 eine grossflächige Vertiefung 11 auf, die zur Aufnahme eines Isolationselements vorgesehen ist, zum Beispiel aus Stein- oder Glaswolle.

Das im Wesentlichen rechteckige, plattenförmige Mittelteil 15 der Dichtung 7 ist umgeben von einem U-förmigen Profil 17 mit Öffnung nach oben. Die Aussenwand 19 des U-Profils trägt eine Mehrzahl Dichtlippen 21. Im Beispiel sind fünf Dichtlippen 21 gezeigt. Die Dichtlippen befinden sich in den oberen zwei Dritteln der Aussenwand 19, also beabstandet vom Boden (Basis) 23 des U-Profils 17, um unter Ausnützung der Elastizität des metallische Werkstoffs, aus dem die Dichtung 17 besteht, eine federnde Anlage der Dichtlippen 21 an die Innenwand 5 des Bauschacht 1 zu erzielen.

Die Dichtlippen 21 haben beispielsweise einen symmetrischen, dreieckigen Querschnitt, wobei die Flanken zueinander einen Winkel im Bereich 20°- 80° bilden, bevorzugt 60°. Für ein erleichtertes Gleiten auf den Innenseiten 5 bietet es sich an, die Dichtlippen einer der Oberflächen mit einem geeigneten Verfahren zu modifizieren. Denkbar ist zum Beispiel Sandstrahlen, insbesondere mit Glasperlen. Es resultiert eine Oberfläche, die im Mikrometermassstab von abgerundeten Erhebungen gebildet wird. Dadurch resultieren abgerundete, punktförmige Kontakte mit der Innenwand 5, die jedoch immer noch die erforderliche Dichtheit gegenüber dem pulverförmigen Baumaterial bieten, das in Anlagen der additiven Fertigung Einsatz findet. Auch Eindringen von Sauerstoff wird effektiv verhindert.

Zur Sicherstellung eines genügenden und gleichmässigen Anliegens der Dichtlippen 21 sowie des erforderlichen Anpressdrucks ist nahe der Öffnung des U-Profils 17 im U-Profil 17 eine geschlitzte Hülse 25 als Federelement angeordnet. Die Hülse 25 erstreckt sich über die gesamte Länge des U-Profils entlang der U-Profil-Innenwand 27. Zur Festlegung der Position der Hülse 25 im U-Profil 17 sind innen an der Dichtungswand (Aussenwand) 19 wie auch an der U-Profilinnenwand 27 je eine Vertiefung 29 vorhanden. Die Vertiefungen 29 sind jedenfalls in der oberen Hälfte des U-Profils 17 angeordnet, bevorzugt im oberen Viertel.

An den Ecken 31, an denen je zwei U-Profile 21 zusammenstossen, sind die Dichtungswände 19 durch eine zylindrische Ausnehmung 33 geschwächt, um die durch die Form gegebene Versteifung zu kompensieren und einer übermässigen Abnutzung im Bereich der Ecken 37 (Figur 1) des Bauschachts 1 entgegenzuwirken.

Als Material für die Dichtung 7 wie auch der als Federelemente wirkenden geschlitzten Hülsen 25 kommt warmfester Werkzeugstahl oder warmfester Edelstahl zur Anwendung. Das Material wird so gewählt, dass die Warmfestigkeit bis mindestens 500 °C gegeben ist, für besondere Anwendungen auch bis mindestens 800 °C. Warmfest in diesem Zusammenhang bedeutet, wie allgemein in der Technik bekannt, dass das Material bis zur angegebenen Temperatur ein stabiles Gefüge aufweist, insbesondere eine plastische Verformung nicht auftritt.

Bevorzugt ist das Material der Dichtung insbesondere an den Spitzen der Dichtlippen beschichtet, z.B. verchromt, verzinkt, mit Keramik beschichtet. Die Beschichtung dient der erhöhten Standfestigkeit.

Konkret kann als Kriterium angesetzt werden, dass die 0,2 %-Streckgrenze (Spannung, bei der eine eindimensionale plastische Dehnung um 0,2 % auftritt) bei der spezifizierten höchsten Anwendungstemperatur (z.B. 450 °C, 500 °C, 800 °C) mindestens 50 % der Spannung bei tiefer Temperatur (Zimmertemperatur bis zu der oft angegebeben Temperatur 200 °C) beträgt. Alternativ kann auch festgelegt werden, dass warmfester Stahl eine 0,2 %-Streckgrenze von mindestens 100 MPa (Megapascal), besser 120 MPa bei der höchsten Anwendungstemperatur aufweist

Für eine den Ansprüchen genügende Dichtwirkung ist die Dichtung 7 mit einem geringfügigen Übermass gegenüber dem Innenmass des Bauschachts 1 ausgelegt. Da die Dichtung insgesamt aus einem metallischen Werkstoff besteht, liegt dieses Übermass im Bereich von zehntel oder auch nur hundertstel Millimeter, um die erforderliche Vorspannung beim Einsetzten der Dichtung in den Bauschacht 1 zu erzielen.

### Runder Bauschacht

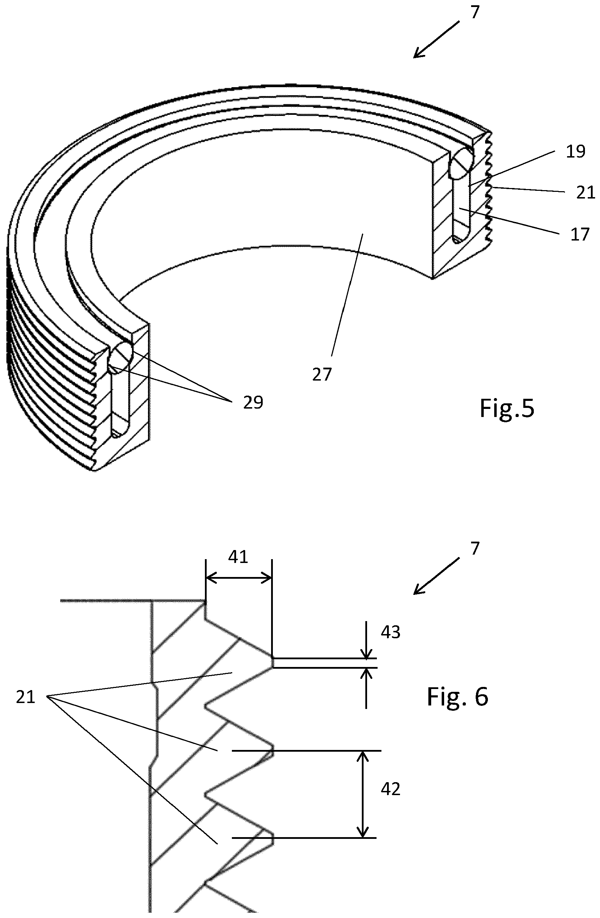

Die erfindungsgemässe Dichtung 7 ist auch kreisrund herstellbar, s. Fig. 5. Sie kann inclusive des U-Profils 17 im wesentlichen auf einer Drehbank hergestellt werden, was in der Praxis in der Regel schneller geschieht als das Herstellen eines eckigen Form. Dabei wird der Aussenradius der hervorstehenden Dichtlippen 21 so gewählt, dass er einen minimal grösseren Wert als der Radius des Bauschachtes aufweist, oder im Extremfall gleich gross ist. Das Übermass ist bevorzugt höchsten 0,1 mm, weiter steigend bevorzugt höchsten 0,03 mm, 0,01 mm, 0,003 mm oder noch kleiner. Die Elastizität des Materials hat sich als ausreichend erwiesen, um die Kompression beim Einsetzen in den Bauschacht oder auch Spannungen durch thermische Längen- oder Volumenänderungen aufzunehmen. Gegebenenfalls kann in das U-Profil wie bei der zuerst beschriebenen eckigen Form auch ein andruckverstärkenden, gummi- oder federelastisches Element im oberen Teil eingelegt wird, bevorzugt in leichten beidseitigen Vertiefungen in den Wänden des U-Profil fixiert. Das andruckverstärkende Element kann ein O-Ring aus einem polymeren dauerelastischen und entsprechend den Anforderungen temperaturstabilen Material sein, eine (geschlitzte oder ungeschlitzte) Hülse aus einem metallischen Werkstoff sein oder eine Spiralfeder.

Diese Dichtung wird an der Bauplatte als Umfang angebracht und weist daher kein Mittelteil (s. Mittelteil 15 des weiter oben beschriebenen eckigen Ausführungsbeispiels) auf. Denkbar ist jedoch, auch diese Dichtung mit einem solchen Mittelteil auszustatten.

Als besonders günstig haben sich folgende Anordnung und Dimensionen der Dichtlippen 21 für die erfindungsgemässe Dichtung erwiesen, jeweils relativ zum Abstand 42 zwischen zwei Dichtlippen, der damit 100 % darstellt (s. Fig. 5):
- Gleichbleibender Abstand 42 zwischen den Dichtlippen.
- Spitzen der Dichtlippen weisen eine gerade Fläche auf mit einer Breite 43 von 5 bis 40 %.
- Höhe 41 der Dichtlippen 21: 50 bis 200 %.

Einhalten aller vorgenannten Eigenschaften ist besonders bevorzugt, aber das Einhalten auch nur eines Teils davon bis nur eine der Eigenschaften kann bereits genügen, um die Anforderungen an Dichtheit und Standfestigkeit zu erfüllen.

Aus der vorangehenden Beschreibung sind dem Fachmann Abwandlungen und Ergänzungen der Erfindung zugänglich, ohne den Schutzbereich der Erfindung zu verlassen, der durch die Ansprüche definiert ist. Denkbar ist unter anderem:
- Verwendung in polygonalem, insbesondere rechteckigem Bauschacht mit abgerundeten Ecken, d..h. auch die Ecken der Dichtung sind mit Radien, also abgerundet, ausgeführt.
- Ausführungen der Dichtlippen in anderer Form, zum Beispiel mit asymmetrischen Querschnitten.
- Ausführung der Dichtung aus einem hochleistungsfähigen polymeren Material, insbesondere PTFE (Polytetrafluorethylen) und insbesondere gefülltem PTFE. Die Füllung kann ein Glas (Mineralglas, Quarz) oder Karbon, jeweils kugelig oder faserfömig, oder eine Mischung aus diesen Materialien sein. Die maximale Anwendungstemperatur liegt hier tiefer, insbesondere bis mindestens 200 °C, bevorzugt bis mindestens 250 °C. Die Füllung bewirkt eine Erhöhung der Widerstandsfähigkeit (Standzeit) des Materials, oder von beidem. Analog zur Dichtung aus Metall wird ein Federelement nahe der Öffnung des U-Profils eingesetzt, wobei hier auch ein umlaufender O-Ring aus entsprechend temperaturfestem elastischem Kunststoff oder eine umlaufende Spiralfeder denkbar ist. Denkbar ist auch Silikon statt PTFE ohne oder (bevorzugt) mit Füllung.
- Anstelle geschlitzter Hülsen liegt eine Spiralfeder in dem U-Profil als Federelement.
- Anstelle mindestens einer, insbesondere aller geschlitzter Hülsen liegt jeweils eine ungeschlitzte Hülse in dem U-Profil als Federelement.
- Statt einteilig ist das Federelement (geschlitzte Hülse etc) ein mehrteiliges Element, als eine Anzahl (2 oder mehr) entsprechend kürzerer derartige Elemente.
- Variierender Abstand der Dichtlippen. In diesem Fall ist bei Dichtlippen mit zwei benachbarten Dichtlippen der Mittelwert der Abstände zu den benachbarten Dichtlippen als Basiswert 100 % für das Einhalten der bevorzugten Masse zu nehmen.

## Patentansprüche

1. Dichtungseinrichtung (7) zum Abdichten einer Bauplattform gegenüber der Innenseite (5) einer Wand (3) eines Bauschachts (1) einer Anlage der additiven Fertigung, **dadurch gekennzeichnet, dass** die Dichtungseinrichtung (7) eine Dichtungswand (19) aufweist mit einer Aussenseite, wobei die Aussenseite mit mindestens einer Dichtlippe (21) mit einem Spitzenabschnitt versehen ist, der Spitzenabschnitt zur Anlage an die Innenwand des Bauschachts ausgebildet ist und wobei die Dichtungswand (19) aus einem metallischen Werkstoff, insbesondere einem Metall oder einer metallischen Legierung, oder einem dauerelastischen Polymer besteht.

2. Dichtungseinrichtung gemäss Anspruch 1, **dadurch gekennzeichnet, dass** das Polymer Silikon oder PTFE ist, bevorzugt gefüllt, weiter bevorzugt gefüllt und insbesondere bevorzugt gefüllt mit einem Material ausgewählt aus Karbon, Mineralglas und Quarzglas oder einer Mischung daraus, wobei das Füllmaterial bevorzugt kugelig oder faserförmig oder eine Mischung dieser Formen ist.

3. Dichtungseinrichtung gemäss Anspruch 2, **dadurch gekennzeichnet, dass** sie bis mindestens 200 °C stabil ist, bevorzugt bis mindestens 250°C.

4. Dichtungseinrichtung (7) gemäss Anspruch 1, **dadurch gekennzeichnet, dass** wenigstens die Dichtungswand (19) aus einem warmfesten metallischen Werkstoff, bevorzugt einem warmfesten Stahl, besteht.

5. Dichtungseinrichtung (7) gemäss Anspruch 4, **dadurch gekennzeichnet, dass** der warmfeste metallische Werkstoff mindestens bis 400 °C, bevorzugt mindestens bis 450 °C, weiter bevorzugt bis mindestens 500 °C und insbesondere bevorzugt bis mindestens 800 °C warmfest ist.

6. Dichtungseinrichtung (7) gemäss einem der Ansprüche 4 bis 5, **dadurch gekennzeichnet, dass** die Dichtungswand wenigstens im Spitzenbereich der Dichtlippen beschichtet ist, bevorzugt verchromt, verzinkt oder mit einer Keramik beschichtet ist.

7. Dichtungseinrichtung (7) gemäss einem der Ansprüche 1 bis 6, **dadurch gekennzeichnet, dass** die Dichtungswand (19) insgesamt eine polygonale, bevorzugt rechteckige Form aufweist und sich aus Dichtungswandsegmenten zusammensetzt, die in Ecken (37) miteinander verbunden sind.

8. Dichtungseinrichtung (7) gemäss einem der Ansprüche 1 bis 7, **dadurch gekennzeichnet, dass** sie insgesamt eine kreisrunde Form aufweist.

9. Dichtungseinrichtung (7) gemäss einem der Ansprüche 1 bis 8, **dadurch gekennzeichnet, dass** die Dichtungswand (19) eine äussere Wand eines U-Profils (17) ist.

10. Dichtungseinrichtung (7) gemäss Anspruch 9, **dadurch gekennzeichnet, dass** die mindestens eine Dichtlippe (21), bevorzugt alle Dichtlippen, mindestens um ein Drittel der Höhe der Dichtungswand (19) am U-Profils, bevorzugt mindestens die Hälfte der Höhe, von der Basis (23) des U-Profils entfernt ausgebildet sind, um einen federnden Andruck zu erhalten.

11. Dichtungseinrichtung (7) gemäss einem der Ansprüche 1 bis 10, **dadurch gekennzeichnet, dass** die mindestens eine Dichtlippe (21) von der Basis zur Spitze hin sich verjüngend ausgebildet ist.

12. Dichtungseinrichtung (7) gemäss einem der Ansprüche 1 bis 11, **dadurch gekennzeichnet, dass** die mindestens eine Dichtlippe (21), bevorzugt alle Dichtlippen, eine Oberfläche mit abgerundeten Erhebungen wie durch Sandstrahlen, bevorzugt mit Glasperlen, erzielbar aufweist, um ein Anliegen an die Schachtinnenwand durch eine Vielzahl Punktkontakten und damit geringeren Gleitwiderstand zu ermöglichen, jedoch Dichtigkeit gegenüber einem Pulver, bevorzugt auch Flüssigkeiten und Gasen, zu gewährleisten.

13. Dichtungseinrichtung (7) gemäss einem der Ansprüche 9 bis 12, **dadurch gekennzeichnet, dass** in der oberen Hälfte des U-Profils zwischen den Wänden ein Federelement (25) angeordnet ist, so dass der federelastische Widerstand gegen eine Verengung des U-Profils (17) erhöht ist.

14. Dichtungseinrichtung (7) gemäss Anspruch 13, **dadurch gekennzeichnet, dass** sich das Federelement (25) über eine Längsachse erstreckt, wobei die Federwirkung quer zur Längsachse ausgebildet ist, und das Federelement sich über mindestens 80 %, bevorzugt mindestens 90 %, der Länge des U-Profils (17) eines Dichtungswandsegments erstreckt.

15. Dichtungseinrichtung (7) gemäss einem der Ansprüche 13 bis 14, **dadurch gekennzeichnet, dass** das Federelement (25) die Form eines in Längsrichtung geschlitzten Rohrs aufweist und aus einem warmfesten Stahl besteht.

16. Dichtungseinrichtung (7) gemäss Anspruch 13, **dadurch gekennzeichnet, dass** das Federelement (25) ein O-Ring oder eine Spiralfeder ist.

17. Anlage der additiven Fertigung mit einer Bauplattform, die mit einer Dichtungseinrichtung (7) gemäss einem der vorangehenden Ansprüche versehen ist.
